# EUROPEAN PATENT APPLICATION

(11) **EP 1 632 317 A1**
(43) Date of publication of application: **08.03.2006**
(21) Application number: 03817256.5
(22) Date of filing: 12.06.2003
(51) Int. Cl.: B25J 3/00, B25J 5/00, B25J 13/00, G05D 3/00

(54) **ROBOT REMOTE CONTROL SYSTEM**

(71) Applicant: TMSUK Co., Ltd., Kitakyushu-shi, Fukuoka 803-0851 (JP)
(72) Inventor: BABA, Katsuyuki, c/o Tmsuk Co., Ltd., Kitakyushu-shi Fukuoka 803-0851 (JP); INO, Shigeaki, c/o Tmsuk Co., Ltd., Kitakyushu-shi Fukuoka 803-0851 (JP); TAKAMOTO, Yoichi, c/o Tmsuk Co., Ltd., Kitakyushu-shi Fukuoka 803-0851 (JP)
(74) Representative: HOFFMANN EITLE
(86) International application number: PCT/JP2003/007451
(87) International publication number: WO 2004/110702

(57) **Abstract**

An object of the invention is to provide a remote control system for robot in which a remotely controlled robot apparatus is capable of carrying out skillful movement and movement for removing a heavy load. A robot remote control apparatus 1 includes a remote instruction unit 4 for generating control data for the robot apparatus 2, a first computer unit for inputting and processing the control data, and a first mobile transmission unit for transmitting the control data to a base station 19 connected to a public transmission network 20; the robot apparatus 2 includes a second mobile transmission unit for receiving the control data transmitted from the base station 21 connected to the public transmission network 20 and a second computer unit for processing the control data and controlling a mechanism portion 10; the mechanism portion includes one or two heavy-load working arms, one or two light-load working arms, and a traveling system, all of which are controlled by the second computer unit; and the second computer unit controls the one or two heavy-load working arms, the one or two light-load working arms and the traveling system on the basis of the control data for the robot apparatus 2.

## Description

### Technical Field of the Invention

The present invention relates to a remote control system for robot, which remotely controls the robot apparatus based on control data radio-transmitted from a robot remote control apparatus for the purpose of rescuing an object to be rescued such as a human being and restoration work at a dangerous site.

### Background Art of the Invention

For example, a system disclosed in Japanese Published Unexamined Utility Model Application No. Hei-6-68977 is available as a remote control system for robot for remotely controlling a rescue robot apparatus.

A robot apparatus in the remote control system for robot described in the above-described published application conveys an object person to be rescued, who is placed on its base frame, in which the object person to be rescued is moved by remote-controlled slave manipulator arms while observing a shot image picked up by a television camera, and is placed on its base frame for rescue.

However, in the prior art remote control system for robot, slave manipulator arms make rough movement to move an object person to be rescued, onto the base frame, wherein there is a problem in that the slave manipulator arms cannot respond with skillful movement and movement for removing a heavy load. Also, there is another problem in that the slave manipulator arms cannot cope with skillful movement at a dangerous site and movement for removing a heavy load.

In the remote control system for robot, the robot apparatus to be remotely controlled is required to carry out skillful movement and movement for removing a heavy load.

It is therefore an object of the present invention to provide a remote control system for robot, in which a robot apparatus to be remotely controlled is capable of carrying out skillful movement and movement for removing a heavy load.

### Disclosure of the Invention

In order to solve the problems, a remote control system for robot according to the invention is a remote control system for robot that includes a robot remote control apparatus for remotely controlling a robot and a robot apparatus controlled based on data from the remote control apparatus, wherein the robot remote control apparatus is provided with a first computer unit for generating control data for the robot apparatus, and a first mobile transmission unit for transmitting the control data to a base station connected to a public transmission network; the robot apparatus is provided with a second mobile transmission unit for receiving control data transmitted from the base station connected to the public transmission network, and a second computer unit for processing the control data and controlling a mechanism portion; the mechanism portion is provided with one or two heavy-load working arms, one or two light-load working arms, and a travelling system, all of which are controlled by the second computer unit; and the second computer unit controls one or two heavy-load working arms, one or two light-load working arms and a travelling system on the basis of the control data for the robot apparatus.

Accordingly, a remote control system for robot is obtainable, in which a remotely controlled robot apparatus is capable of carrying out skillful movements and movements for removing heavy loads.

A remote control system for robot according to the first aspect of the invention is a remote control system for robot including a robot remote control apparatus for remotely controlling a robot and a robot apparatus controlled based on data from the remote control apparatus; wherein the robot remote control apparatus includes a remote instruction unit for generating control data for the robot apparatus, a first computer unit for inputting and processing the control data, and a first mobile transmission unit for transmitting the control data to a base station connected to a public transmission network; the robot apparatus includes a second mobile transmission unit for receiving the control data transmitted from the base station connected to the public transmission network, and a second computer unit for processing the control data and controlling a mechanism portion; the mechanism portion includes one or two heavy-load working arms, one or two light-load working arms, and a travelling system, all of which are controlled by the second computer unit; and the second computer unit controls one or two heavy-load working arms, one or two light-load working arms, and the travelling system on the basis of the control data for the robot apparatus.

With such a construction, since control data from the robot remote control apparatus is transmitted via the first mobile transmission unit, it is possible to control the robot apparatus even if the robot apparatus operating as an object to be controlled is installed at least anywhere in Japan, and at the same time, since the robot apparatus includes one or two heavy-load working arms and one or two light-load working arms, one or two heavy-load working arms are caused to carry out activities for removing a heavy load, and one or two light-load working arms are caused to carry out skillful activities, wherein the remote control system for robot has an action by which a quick rescue activity can be carried out.

Herein, the heavy-load working arm and light-load working arm may be provided as a pair or a singular heavy-load working arm and a pair of light-load working arms in compliance with the use of a robot.

A remote control system for robot according to the second aspect is featured in that, in the remote control system for robot according to the first aspect, one or two heavy-load working arms and one or two light-loadworking arms, respectively, include a basal arm, a branch arm, a wrist portion and a finger portion.

With such a construction, since the robot apparatus is provided with one or two heavy-load working arms and one or two light-loadworking arms disposed inside one or two heavy-load working arms, the heavy-load working arms disposed outside are caused to carry out powerful activities such as removal of a heavy load, and the light-load working arms disposed inwardly are caused to carry out skillful activities not requiring great power, wherein the remote control system for robot has an action by which a quick rescue activity can be securely carried out.

A remote control system for robot according to the third aspect is featured in that, in the remote control system for robot according to the first aspect or the second aspect, one or two heavy-load working arms and the travelling system are driven by hydraulic power, and one or two light-load working arms are driven by electric power.

With such a construction, since one or two heavy-load working arms driven by hydraulic power are caused to carry out powerful activities such as removal of a heavy load, and one or two light-load working arms driven by electric power are caused to carry out highly precise and skillful activities, it becomes possible to quickly and securely carry out a rescue activity at high accuracy.

A remote control system for robot according to the fourth aspect of the invention is featured in that, in the remote control system for robot according to any one of the first aspect through the third aspect, the travelling system is composed of crawlers driven by hydraulic power.

With such a construction, the robot apparatus has an action by which it can easily move at a high speed even if the site is a hard-to-travel place such as an uneven road and steeply inclined topographic features.

A remote control system for robot according to the fifth aspect is featured in that, in the remote control system for robot according to any one of the first aspect through the fourth aspect, the robot apparatus includes a carriage base driven by the travelling system, a cabin on the carriage base, and further includes an on-board instruction unit for controlling one or two heavy-load working arms, one or two light-load working arms and the travelling system in the cabin.

With such a construction, the system has an action by which the robot apparatus can be easily controlled not only at a place remote from a site but also at the vicinity of the site, which is on board the cabin.

A remote control system for robot according to the sixth aspect is featured in that, in the remote control system for robot according to any one of the first aspect through the fifth aspect, the mechanism portion includes a plurality of cameras for picking up an object and converting the same into image signals, and a plurality of microphones for converting sound and noise generated in the surroundings into sound signals, the second computer unit transmits the image signals and sound signals via the second mobile transmission unit, and the robot remote control apparatus receives signals transmitted from the second mobile transmission unit, displays the image signals on a monitor display and sends out the sound signals through a speaker as sound.

With such a construction, since it is possible to know the status of the robot apparatus through images and sound even if it is installed at a remote place, the remote control system for robot has an action by which the robot apparatus can be quickly controlled at high accuracy.

A remote control system for robot according to the seventh aspect is featured in that, in the remote control system for robot according to any one of the first aspect through the sixth aspect, a remote instruction unit includes rotatable and movable working arms, a plurality of sensors disposed in the working arms, and a plurality of instruction switches for carrying out ON/OFF instructions, wherein control data for the robot apparatus is generated on the basis of values of rotation and movement detected by a plurality of sensors and ON/OFF of a plurality of instruction switches.

With such a construction, since control data for the robot apparatus can be generated by means of a plurality of sensors and a plurality of instruction switches by operating the steering arms and turning on and off the instruction switches, the remote control system for robot has an action by which the robot apparatus can be easily controlled.

A remote control system for robot according to the eighth aspect is featured in that, in the remote control system for robot according to any one of the fifth aspect through the seventh aspect, the on-board instruction unit includes rotatable and movable working arms, a plurality of sensors disposed in the working arms, and a plurality of instruction switches for carrying out ON/OFF instructions, wherein control data for the robot apparatus is generated on the basis of values of rotation and movement detected by a plurality of sensors and ON/OFF of a plurality of instruction switches.

With such a construction, since control data for the robot apparatus can be generated by means of a plurality of sensors and a plurality of instruction switches by operating the steering arms and turning on and off the instruction switches, the remote control system for robot has an action by which the robot apparatus can be easily controlled.

A remote control system for robot according to the ninth aspect is featured in that, in the remote control system for robot according to the seventh aspect or the eighth aspect, the rotatable and movable steering arms are turned into a fixed state or a released state by a fixing mechanism such as a disk pad brake having a disk portion driven by an actuator.

With such a construction, since the steering arms of the heavy-load working arms and the light-load working arms can be easily set to a fixed state or a released state, the remote control system for robot has an action by which operation for controlling the robot apparatus can be facilitated.

### BRIEF DESCRIPTION OF THE DRAWINGS

FIG. 1 is a block diagram depicting a remote control system for robot according to Embodiment 1 of the invention;
FIG. 2 is a block diagram depicting a robot remote control apparatus which composes the remote control system for robot of FIG. 1;
FIG. 3 is a block diagram depicting a robot apparatus which composes the remote control system for robot of FIG. 1;
FIG. 4 is a block diagram depicting an image/sound transmission system;
FIG. 5 is a block diagram depicting a remote instruction unit;
FIG. 6 is a block diagram depicting an on-board instruction unit;
FIG. 7 is a block diagram depicting a motor driven by a driver unit for the motor;
FIG. 8 is a block diagram depicting a motor driven by a driver unit for the motor;
FIG. 9 is a block diagram depicting a motor driven by a driver unit for the motor;
FIG. 10 is a block diagram depicting a cylinder, etc., driven by a hydraulic servo motor of FIG. 3;
FIG. 11 is a block diagram depicting a cylinder, etc., driven by a hydraulic servomotor of FIG. 3;
FIG. 12A is an external diagram depicting the appearance of a robot apparatus;
FIG. 12B is an external diagram depicting the appearance of the robot apparatus;
FIG. 13 is an external diagram depicting the appearance of the remote instruction unit of FIG 1;
FIG. 14 is an external diagram depicting the appearance of the on-board instruction unit;
FIG. 15 is a schematic diagram depicting the steering arm for the heavy-load working arms of FIG. 13 and FIG. 14;
FIG. 16 is a schematic diagram depicting the steering arm for the light-load working arms of FIG. 13 and FIG. 14;
FIG. 17 is a schematic diagram depicting a joystickportion of FIG. 15;
FIG. 18A is a schematic diagram depicting a joystick portion of FIG. 16;
FIG. 18B is a schematic diagram depicting a joystick portion of FIG. 16;
FIG. 19 is a schematic diagram depicting a foot portion operation panel of FIG. 13 and FIG. 14;
FIG. 20 is an exemplary view depicting a steering arm for the left heavy-load working arm depicted in FIG. 15 and FIG. 17;
FIG. 21 is an exemplary view depicting a steering arm for the left light-load working arm depicted in FIG. 16 and FIG. 18;
FIG. 22 is an exemplary view depicting a heavy-load working arm of the robot apparatus;
FIG. 23 is an exemplary view depicting a light-load working arm of the robot apparatus;
FIG. 24A is an explanatory view depicting a disk pad brake for fixing the positions of respective detecting parts of the steering arm for the heavy-load working arms of FIG. 15 and FIG. 17 and the steering arm for the light-load working arms of FIG. 16 and FIG. 18;
FIG. 24B is an explanatory view depicting a disk pad brake for fixing the positions of respective detecting parts of the steering arm for the heavy-load working arms of FIG. 15 and FIG. 17 and the steering arm for the light-load working arms of FIG. 16 and FIG. 18;
FIG. 24C is an explanatory view depicting a disk pad brake for fixing the positions of respective detecting parts of the steering arm for the heavy-load working arms of FIG. 15 and FIG. 17 and the steering arm for the light-load working arms of FIG. 16 and FIG. 18;
FIG. 25 is a flowchart depicting a transmission motion in the robot remote control apparatus;
FIG. 26 is a flowchart depicting a receiving motion (reaction control) in the robot remote control apparatus;
FIG. 27 is a flowchart depicting a transmission motion in the robot apparatus;
FIG. 28 is a flowchart depicting a receiving motion in the robot apparatus;
FIG. 29 is a flowchart depicting a receiving motion in the robot apparatus; and
FIG. 30 is a flowchart depicting a receiving motion in the robot apparatus.

### BEST MODE FOR CARRYING OUT THE INVENTION

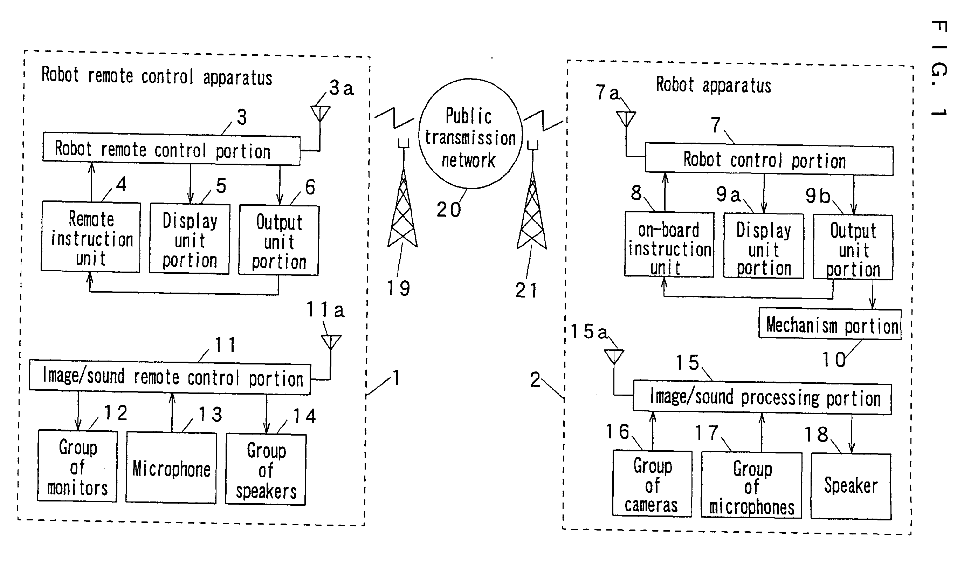

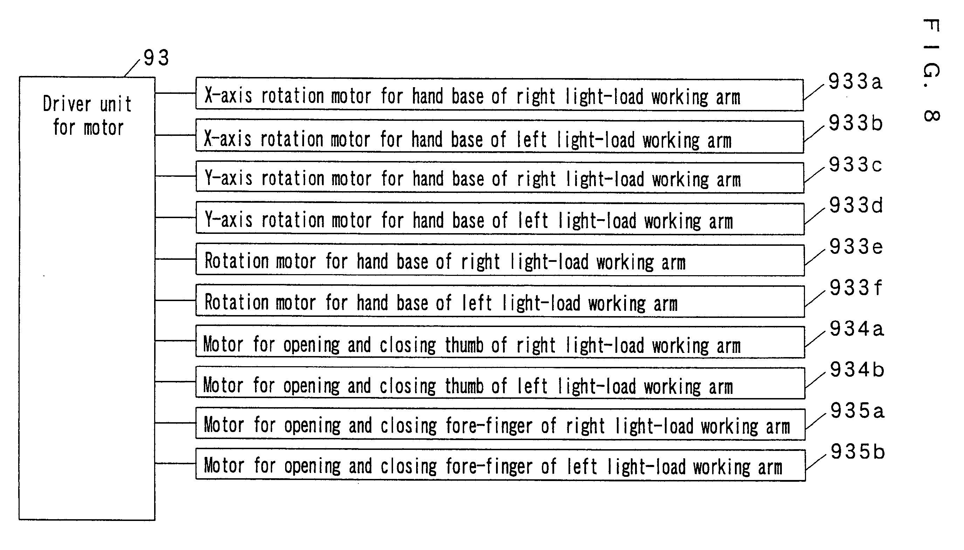

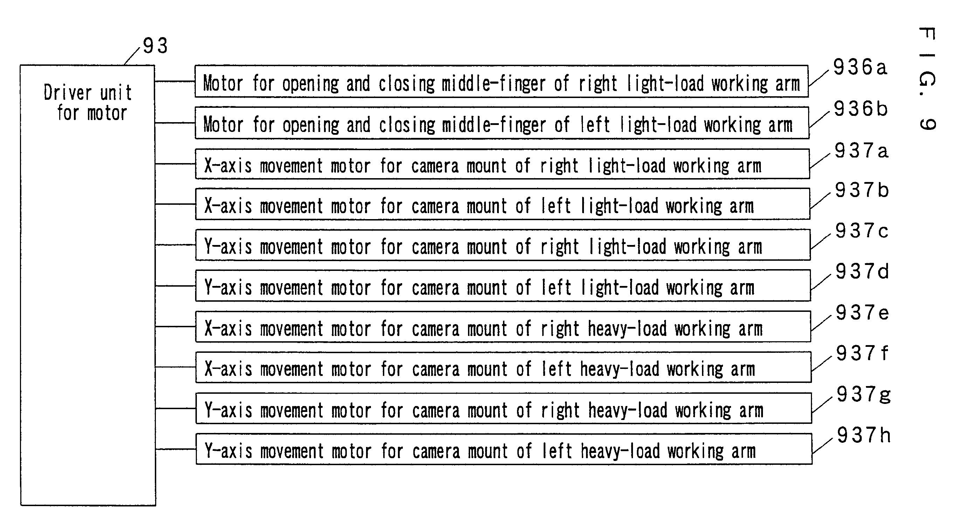

Hereinafter, a description is given of embodiments of the invention with reference to FIG. 1 through FIG. 30.

### (Embodiment 1)

FIG. 1 is a block diagram depicting a remote control system for robot according to Embodiment 1 of the invention;

In FIG. 1, reference numeral 1 denotes a remote control apparatus for remotely controlling a robot apparatus 2 described later. Reference numeral 2 denotes a robot apparatus to be controlled by the robot remote control apparatus 1, and at the same time to transmit images to the robot remote control apparatus 1. Reference numeral 3 denotes a robot remote control portion, and 3a denotes an antenna for transmission and receiving. Reference numeral 4 denotes a remote instruction unit that generates remote instruction signals (control data) . Reference numeral 5 denotes a display unit portion that has various types of display units (herein, only the display unit is illustrated as an example). Reference numeral 6 denotes an output unit portion that has various types of output units. Reference numeral 7 denotes a robot control portion that controls the entirety of the robot apparatus. Reference numeral 7a denotes an antenna for transmission and receiving. Reference numeral 8 denotes an on-board instruction unit that generates on-board instruction signals (control data) and that controls a mechanism portion 10 described later. Reference numeral 9a denotes a display unit portion that has various types of display units (herein, only the display unit is illustrated as an example), and an output unit portion 9b has various types of output units. Reference numeral 10 denotes a mechanism portion consisting of a motor, an engine, a cylinder, etc. Reference numeral 11 denotes an image/sound remote control portion that controls picked-up shot images and sounds by controlling cameras and microphones at the robot apparatus side. Reference numeral 11a denotes an antenna for transmission and receiving, 12 denotes a group of monitors, 13 denotes a microphone, and 14 denotes a group of speakers. Reference numeral 15 denotes an image/sound processing portion that processes picked-up shot images and sounds. Reference numeral 15a denotes an antenna for transmission and receiving, 16 denotes a group of cameras, 17 denotes a group of microphones, 18 denotes a speaker, 19 and 21 denote base stations for mobile transmission units described later, and 20 denotes a public transmission network.

With respect to a remote control system for robot thus constructed, a description is given of the activities.

Remote instruction signals to control the robot apparatus 2, which are outputted from the remote instruction unit 4, are inputted into the robot remote control portion 3, and are outputted from the robot remote control portion 3 as formatted control data. Radio signals including the control data outputted from the robot remote control portion 3 are inputted into the robot control portion 7 via the antenna 3a, base station 19, public transmission network 20, base station 21 and antenna 7a as radio signals. The radio signals are converted to control data in the robot control portion 7. The robot control portion 7 controls the mechanism portion 10 of the robot apparatus 2 in response to the control data.

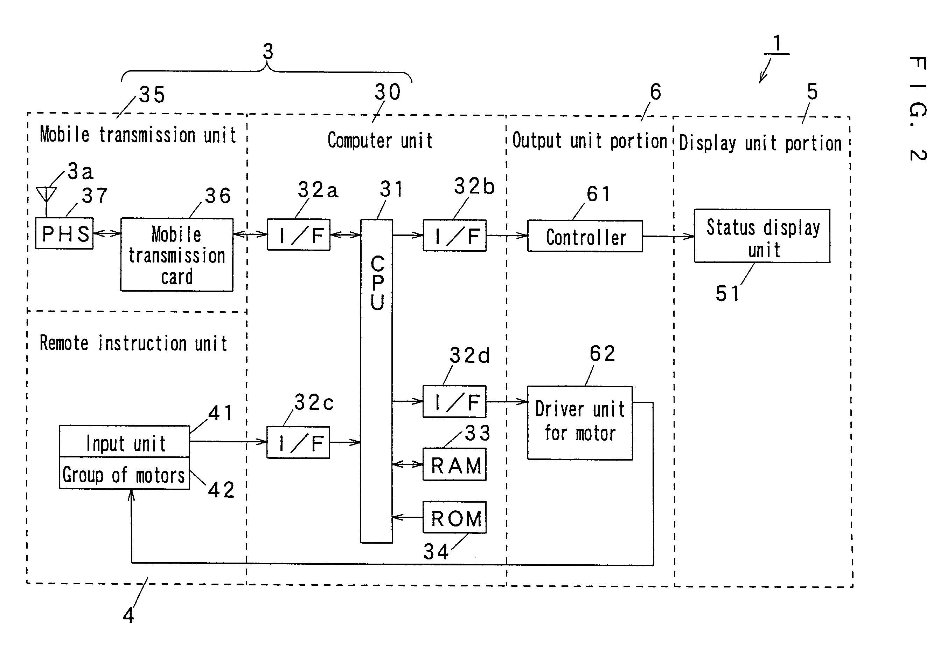

FIG. 2 is a block diagram depicting a robot remote control apparatus 1 that composes a remote control system for robot depicted in FIG. 1.

In FIG. 2, the robot remote control apparatus 1, robot remote control portion 3, antenna 3a, remote instruction unit 4, display unit portion 5, and output unit portion 6 are identical to those in FIG. 1, wherein the same reference numerals are given thereto, and descriptions thereof are omitted.

Reference numeral 30 denotes a computer unit that composes the robot remote control portion 3, 31 denotes a central processing unit (CPU), 32a, 32b, 32c and 32d denote interface portions, 33 denotes a RAM, 34 denotes a ROM, 35 denotes a mobile transmission unit that composes the robot remote control portion 3, 36 denotes a mobile transmission card, 37 denotes a PHS telephone set, 41 denotes an input unit that composes the remote instruction unit 4, 42 denotes a group of motors, 51 denotes a status display unit that composes the display unit portion 5, 61 denotes a controller for controlling the status display unit 51, and 62 denotes a driver unit for controlling the group of motors 42.

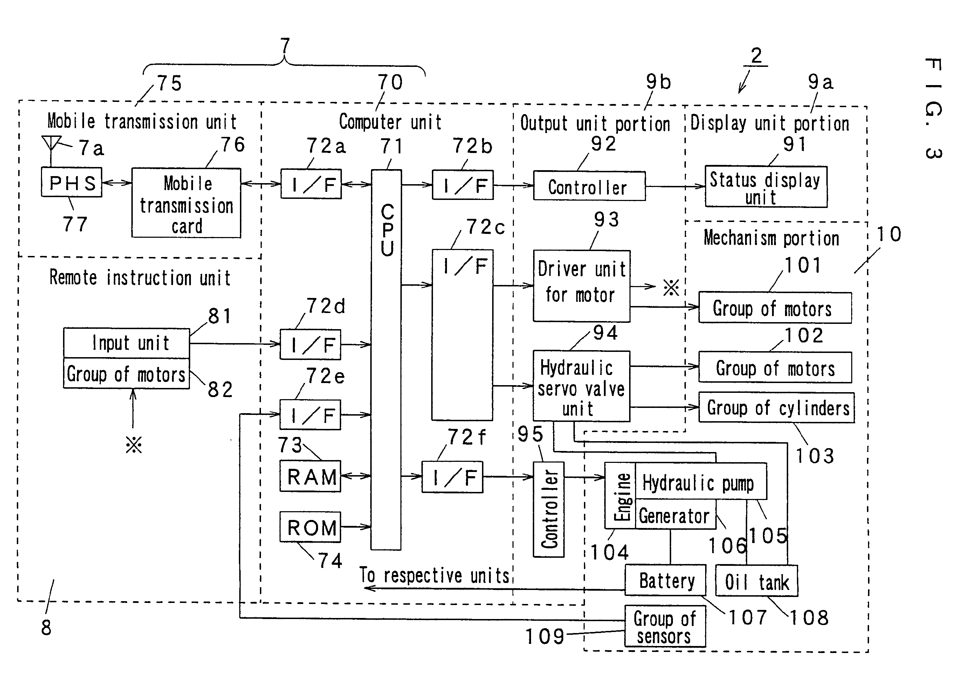

FIG. 3 is a block diagram depicting the robot apparatus 2 that composes the remote control system for robot depicted in FIG. 1.

In FIG. 3, the robot apparatus 2, robot control portion 7, antenna 7a, on-board instruction unit 8, display unit portion 9a, and output unit portion 9b are identical to those in FIG. 1. Therefore, the components are given the same reference numerals, and descriptions thereof are omitted.

Reference numeral 70 denotes a computer unit that composes the robot control portion 7, 71 denotes a central processing unit (CPU), 72a through 72f denote interface portions, 73 denotes a RAM, 74 denotes a ROM, 75 denotes a mobile transmission unit that composes the robot control portion 7, 76 denotes a mobile transmission card, 77 denotes a PHS telephone set, 81 denotes an input unit that composes the on-board instruction unit 8, 82 denotes a group of motors, 91 denotes a status display unit that composes a display unit portion 9a, 92 denotes a controller for controlling the status display unit 91, 93 denotes a driver unit for motors, which controls groups 82 and 101 of motors, 94 denotes a hydraulic servo valve unit for controlling a group 102 of hydraulic motors and a group 103 of cylinders, 95 denotes a controller for controlling the engine 104, 105 denotes a hydraulic pump driven by the engine 104, 106 denotes a generator driven by the engine 95, 107 is a battery charged by the generator 106, 108 denotes a hydraulic tank, and 109 denotes a group of sensors.

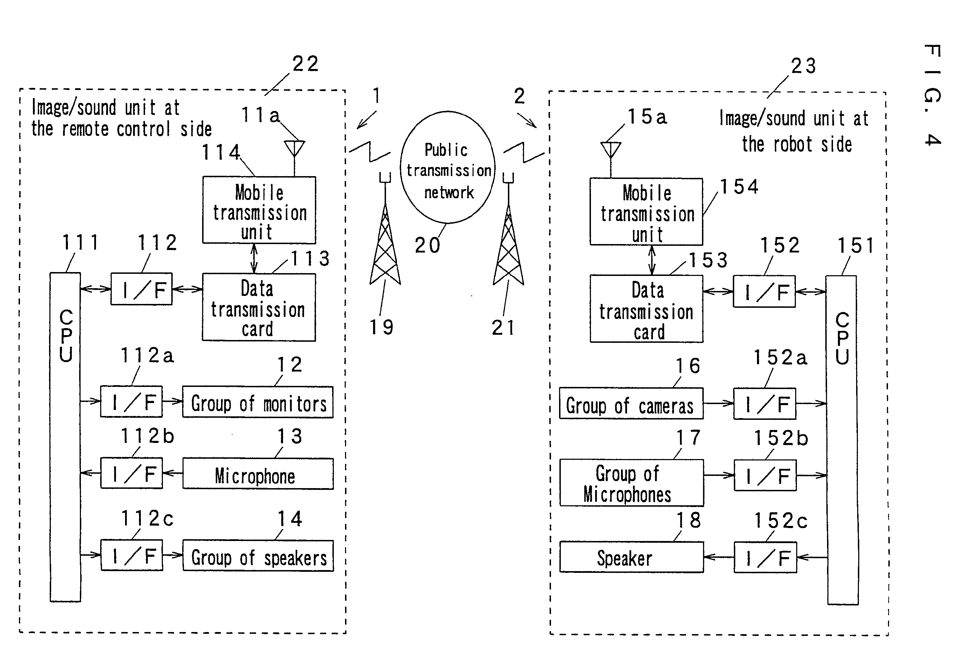

FIG. 4 is a block diagram depicting an image/sound transmission system.

In FIG. 4, the antennas 11a and 15a, a group of monitors 12, microphone 13, speaker group 14, camera group 16, microphone group 17, speaker 18, base stations 19 and 21, and public transmission network 20 are identical to those in FIG. 1. Therefore, the components are given the same reference numerals, and descriptions thereof are omitted.

Reference numeral 22 denotes an image/sound unit at the remote control side, which composes the robot remote control apparatus 1, 23 denotes an image/sound unit at the robot side, which composes the robot apparatus 2, 111 and 151 denote central processing units (CPU), 112, 112a through 112c, 152, and 152a through 152c denote interface portions, 113 and 153 denote data transmission cards, 114 and 154 denote mobile transmission units.

Herein, the CPU 111, interface portion 112, data transmission card 113, and mobile transmission unit 114 compose the image/sound remote control portion 11, and the CPU 151, interface portion 152, data transmission card 153, and mobile transmission unit 154 compose the image/sound processing portion 15.

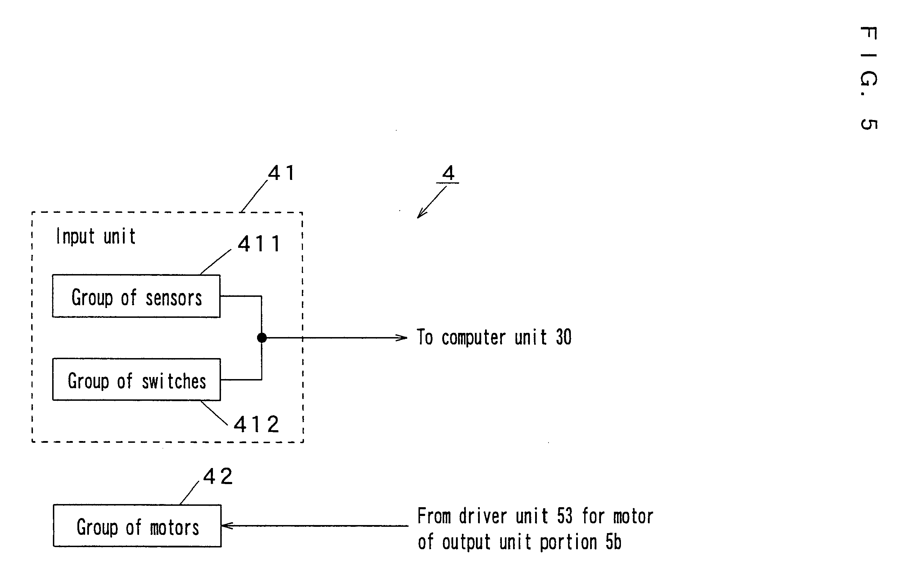

FIG. 5 is a block diagram depicting the remote instruction unit 4.

In FIG. 5, reference numeral 41 denotes an input unit as in FIG. 2, 42 denotes a group of motors as in FIG. 2, and 411 denotes a group of sensors, and 412 denotes a group of switches.

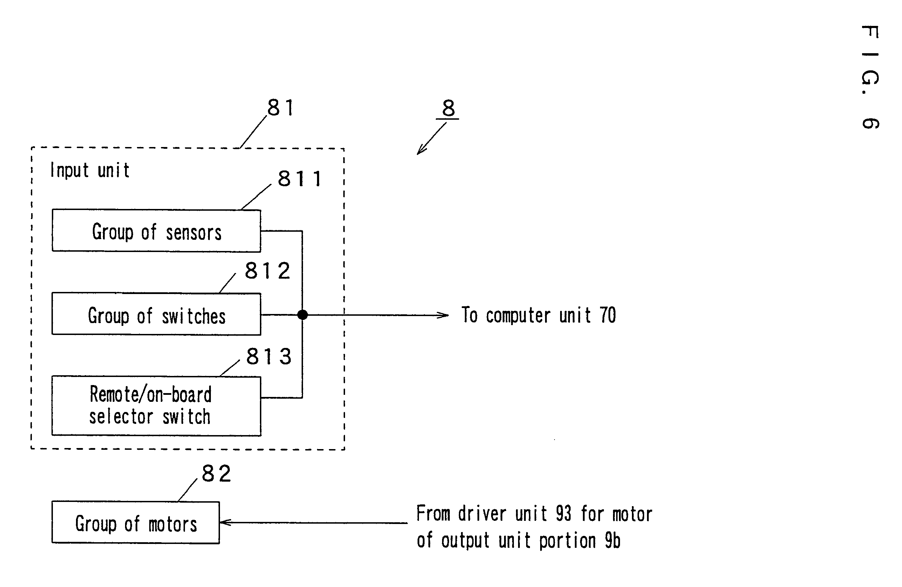

FIG. 6 is a block diagram depicting the on-board instruction unit 8.

In FIG. 6, reference numeral 81 denotes an input unit as in FIG. 3, 82 denotes a group of motors as in FIG. 3, 811 denotes a group of sensors, 812 denotes a group of switches, 813 denotes a remote/on-board selector switch that changes over control by the remote instruction unit 4 and control by the on-board instruction unit 8 in the robot remote control apparatus 1.

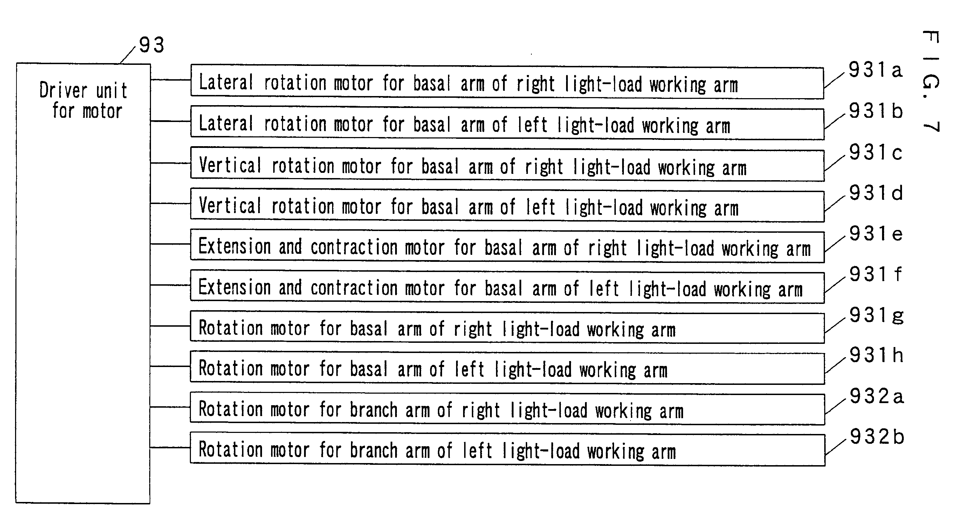

FIG. 7, FIG. 8, and FIG. 9 are block diagrams depicting motors each driven by the driver unit for motors 93.

In FIG. 7 through FIG. 9, 931a through 931h denote motors for the basal arms for driving the basal arms described later, 932a and 932b denote motors for branch arm for driving the branch arms described layer. Reference numerals 933a through 933f denote motors for wrist portion which drive the wrist portions described later, 934a and 934b denote motors for thumbs, 935a and 935b denote motors for forefingers, 936a and 936b denote motors for middle fingers, 937a through 937h denotes motors for camera mounts.

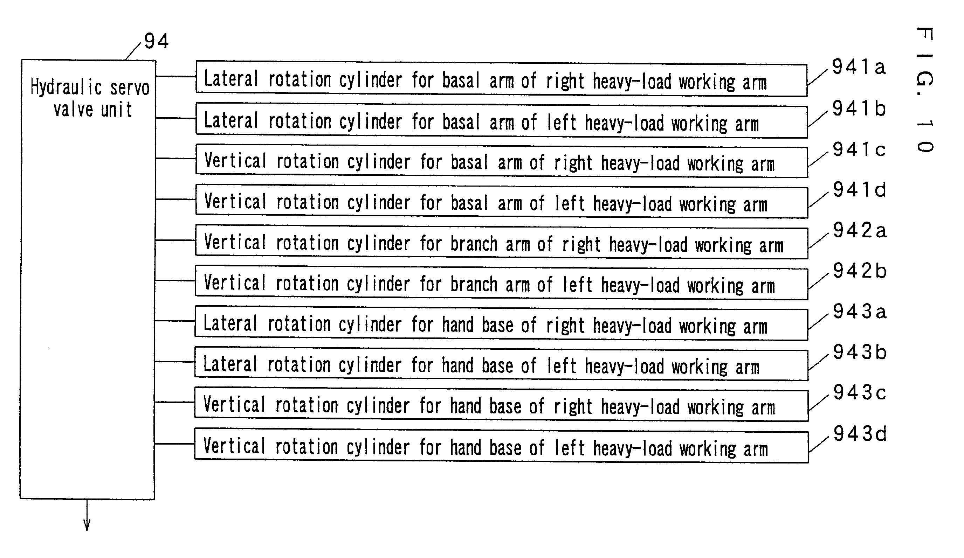

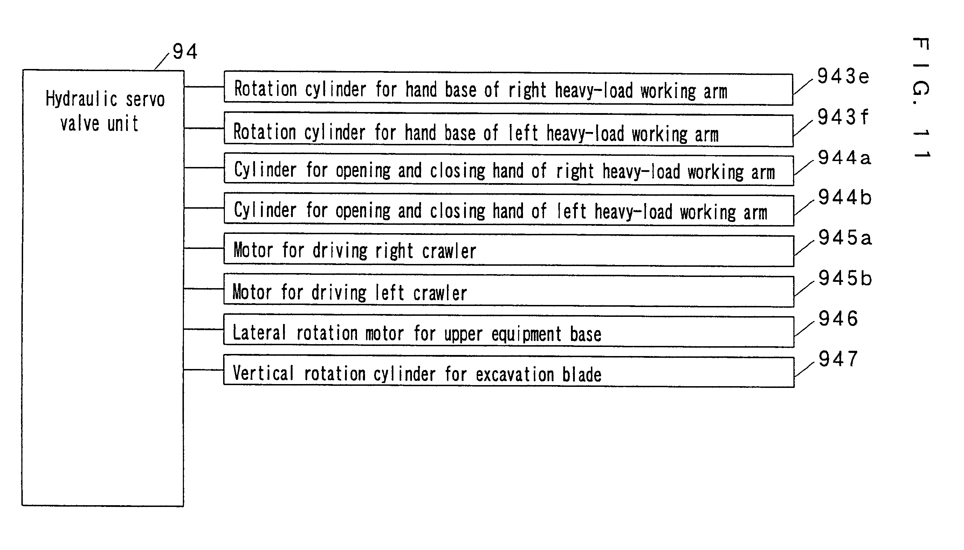

FIG. 10 and FIG. 11 are block diagrams depicting cylinders, etc., which are driven by the hydraulic servo valve unit 94 in FIG. 3.

In FIG. 10 and FIG. 11, reference numerals 941a through 941d denote motors for the basal arms for driving the basal arms described later, 942a and 942b denote motors for the branch arms for driving the branch arms described later, 943a through 943f denote motors for the wrist portions for driving the wrist portions described later, 944a and 944b denote motors for hands, 945a and 945b denote motors for crawler, 946 denotes a motor for the upper equipment base, and 947 denotes a cylinder for an excavation blade.

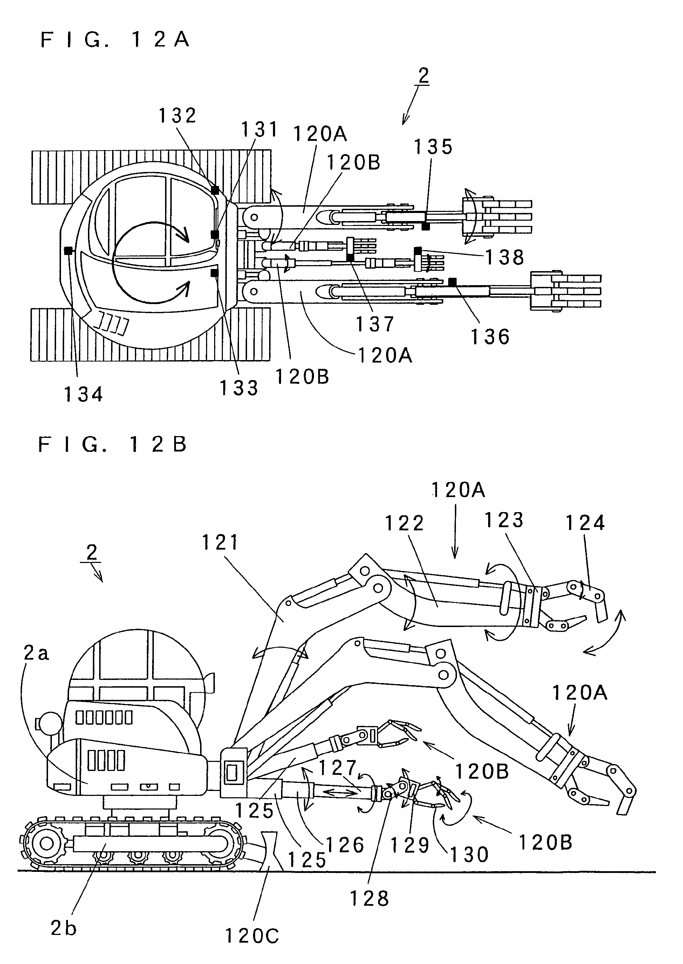

FIG. 12A and FIG. 12B are external diagrams depicting the appearance of the robot apparatus 2.

In FIG. 12, reference numeral 2a denotes an upper equipment base, 2b denotes a crawler, 120A denotes a heavy-load working arm, 120B denotes a light-load working arm, 120C denotes an excavation blade, 121 and 125 denote basal arms, 122 and 128 denote branch arms, 123 and 129 denote wrist portions (wrist portions), 124 and 130 denote hands (finger portions), 126 denotes a cylinder, and 127 denotes a cylinder rod. The components 121 through 124 compose two heavy-load working arms, and the components 125 through 130 compose the light-loadworking arms. Also, reference numeral 131 denotes a front center camera, 132 denotes a front left camera, 133 denotes a front right camera, 134 denotes a rear camera, 135 denotes a left heavy-load working arm camera, 136 denotes a right heavy-load working arm camera, 137 denotes a left light-loadworking arm camera, and 138 denotes a right light-load working arm camera.

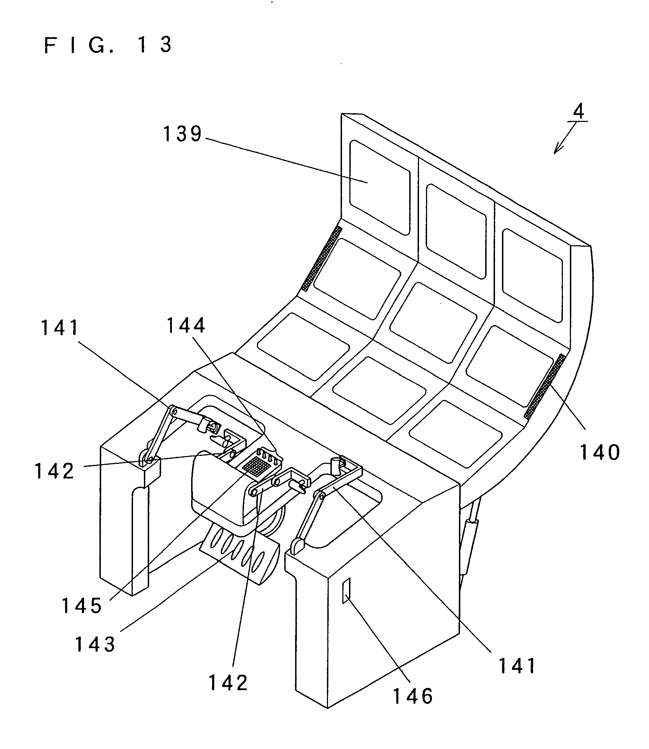

FIG. 13 is an external diagram depicting the appearance of the remote instruction unit 4 depicted in FIG. 1.

In FIG. 13, reference numeral 139 denotes a monitor, 140 denotes a speaker, 141 denotes a steering arm for the heavy-load working arm, which controls the heavy-load working arm 120A of the robot apparatus 2, 142 denotes a steering arm for the light-load working arm, which controls the light-load working arm 120B of the robot apparatus 2, 143 denotes a foot portion operation panel for controlling travelling, 144 denotes a camera mount operating rod for controlling the mounts of the cameras 131 through 138 of the robot apparatus 2, 145 denotes a microphone, and 146 denotes a main power source.

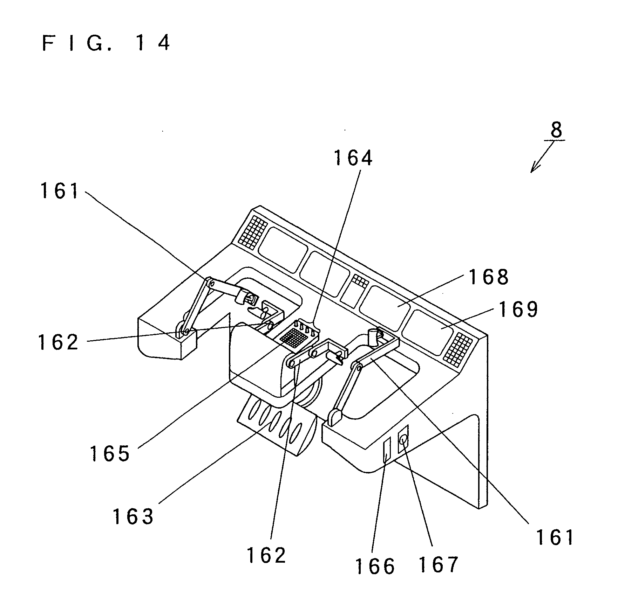

FIG. 14 is an external diagram depicting the appearance of the on-board instruction unit 8.

In FIG. 14, reference numeral 161 denotes a steering arm for the heavy-load working arm, which controls the heavy-load working arm 120A of the robot apparatus 2, 162 denotes a steering arm for the light-loadworking arm, which controls the light-load working arm 120B of the robot apparatus 2, 163 denotes a foot portion operation panel for controlling travelling, 164 denotes a camera mount operating rod for controlling the mounts of the cameras 131 through 138 of the robot apparatus 2, 165 denotes a microphone, 166 denotes a main power source, 167 denotes a remote/on-board selector switch for changing over remote control and on-board control, 168 denotes a monitor, and 169 denotes a speaker. As has been made clear by comparison of FIG. 13 with FIG. 14, the structure of the remote instruction unit 4 is the same as that of the on-board instructionunit 8, excepting for the remote/on-board selector switch 167.

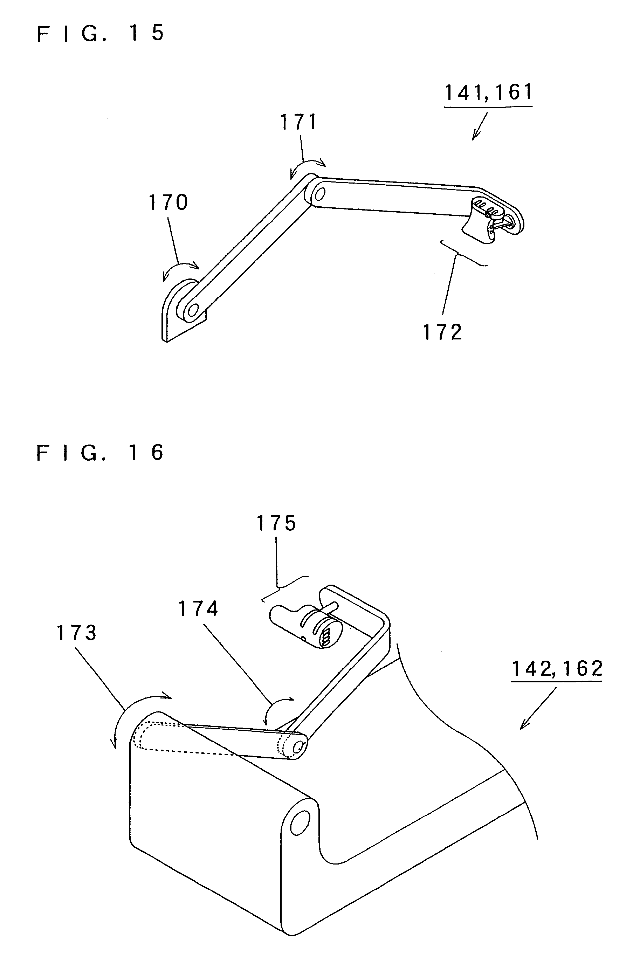

FIG. 15 is an external diagram briefly depicting the steering arms 141 and 161 for the heavy-load working arms in FIG. 13 and FIG. 14.

In FIG. 15, reference numeral 170 denotes a portion for detecting vertical rotation of the basal arm, 171 denotes a portion for detecting vertical rotation of the branch arm, and 172 denotes a joystick portion.

FIG. 16 is a schematic diagram depicting the steering arms 142 and 162 of the light-load working arms of FIG. 13 and FIG. 14.

In FIG. 16, reference numeral 173 denotes a portion for detecting vertical rotation of the basal arm, 174 denotes a portion for detecting vertical rotation of the branch arm, and 175 denotes a joystick portion.

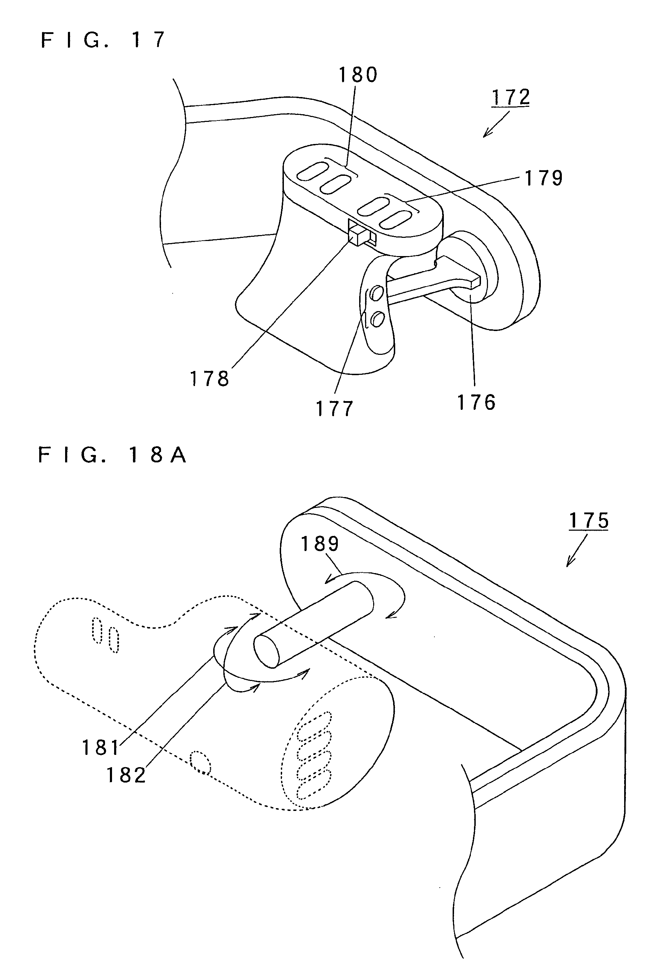

FIG. 17 is a schematic diagram depicting the joystick portion 172 of FIG. 15.

In FIG. 17, reference numeral 176 denotes a portion for detecting turn of the wrist portion, 177 denotes a portion for detecting vertical rotation of the wrist portion, 178 denotes a switch for instructing lateral rotation of the basal arm, 179 denotes a switch for instructing lateral rotation of the wrist portion, and 180 denotes a switch for instructing to open and close the hand.

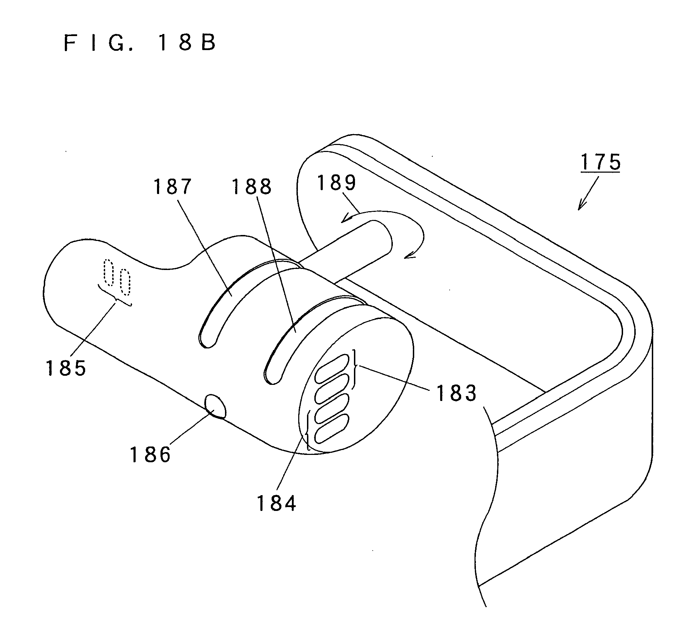

FIG. 18A and FIG. 18B are schematic diagrams depicting the joystick portion 175 of FIG. 16.

In FIG. 18, reference numeral 181 denotes a portion for detecting X-axis rotation of the wrist portion, 182 denotes a portion for detecting Y-axis rotation of the wrist portion, 183 denotes a portion for detecting turn of the basal arm, 184 denotes a portion for detecting lateral rotation of the basal arm, 185 denotes a switch for instructing extension and contraction of the basal arm, 186 denotes a switch for instructing to open and close the thumb, 187 denotes a switch for instructing to open and close the middle finger, 188 denotes a switch for instructing to open and close the forefinger, and 189 denotes a portion for detecting turn of the wrist portion.

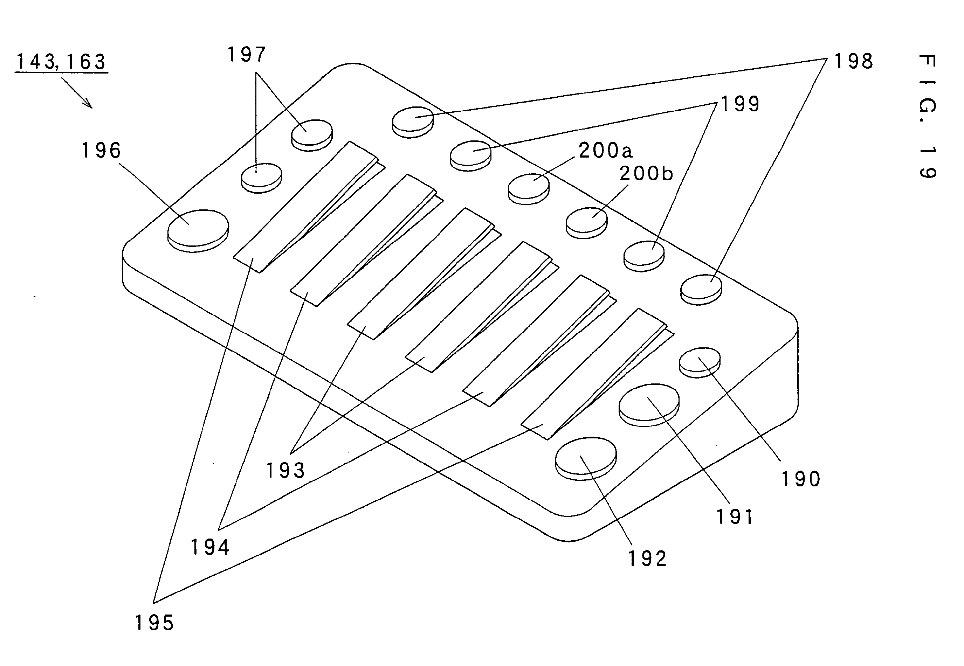

FIG. 19 is a schematic diagram depicting the foot portion operation panels 143 and 163 of FIG. 13 and FIG. 14.

In FIG. 19, an illumination instructing switch 190 turns on and off an illumination apparatus (not illustrated) of the robot apparatus 2. Reference numeral 191 denotes a transmission start instruction switch that instructs to start transmission. Reference numeral 192 denotes an all-out stop instructing switch 192 that instructs all-out stop of the robot apparatus 2. Reference numeral 193 denotes a lateral/forward displacement detecting sensor that instructs lateral and forward movement. Reference numeral 194 denotes a lateral/rearward displacement detecting sensor that instructs lateral and rearward movement. A lateral rotation displacement detecting sensor 195 of the upper equipment base laterally turns the upper equipment base. An engine start instructing switch 196 starts the engine 104 of FIG. 3. A vertical rotation instructing switch 197 of the excavation blade vertically moves the excavation blade 120C. A fix-cancel instructing switch 198 of the steering arm for the heavy-load working arm fixes and cancels the steering arms 141 and 161 of the left and right heavy-load working arms. A fix-cancel instructing switch 199 of the steering arm for the light-load working arm fixes and cancels the steering arms 142 and 162 of the left and right light-load working arms. A speaker instructing switch 200a turns on and off the speaker 18 of the robot apparatus 2. A microphone instructing switch 200b turns on and off the group of microphone 17 of the robot apparatus 2.

By operating the steering arms 141 and 142 and 161 and 162 of the heavy-load working arms and light-load working arms depicted in FIG. 13 through FIG. 18 and turning on and off the respective switches, various types of control data (control data including ON/OFF instructions) are given from the remote instruction unit 4 and on-board instruction unit 8 of the robot remote control apparatus 1 to the robot apparatus 2, and the arms of the robot apparatus 2 are controlled. In addition, by turning on and off the respective switches of the foot portion operation panels 143 and 163 of FIG. 19 and displacing the respective displacement detecting sensors, ON/OFF instructions or displacement instructions are given to the robot apparatus 2 as control data, and travelling of the robot apparatus 2 is controlled. Such detecting sensors and switches of the steering arms are depicted in Table 1, Table 2 and Table 3.

Table 1 describes the steering arms 142 and 162 of the left and right light-load working arms, Table 2 describes the steering arms 142 and 162 of the left and right light-loadworking arms and the steering arms 141 and 161 of the left and right heavy-load working arms, and Table 3 describes the steering arms 141 and 161 of the left and right heavy-load working arms, left and right crawlers 2b, upper equipment base 2a and excavation blade 120C.

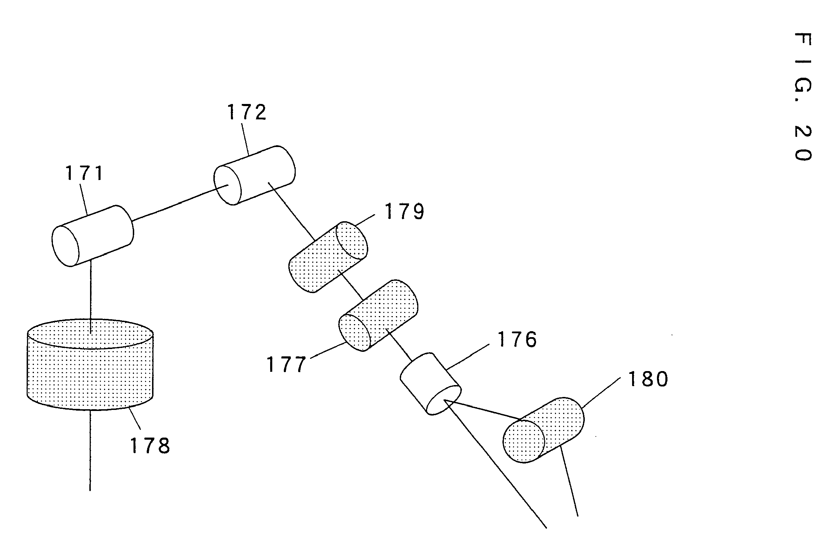

FIG. 20 is an exemplary view depicting the steering arms 141 and 161 of the left heavy-load working arm of FIG. 15 and FIG. 17.

In FIG. 20, the vertical rotation detecting portion 171 of the basal arms, vertical rotation detecting portion 172 of the branch arms, turn detecting portion 176 of the wrist portion, vertical rotation instructing switch 177 of the wrist portion, lateral rotation instructing switch 178 of the basal arm, lateral rotation instructing switch 179 of the wrist portion, and hand open/close instructing switch 180 are identical to those in FIG. 17.

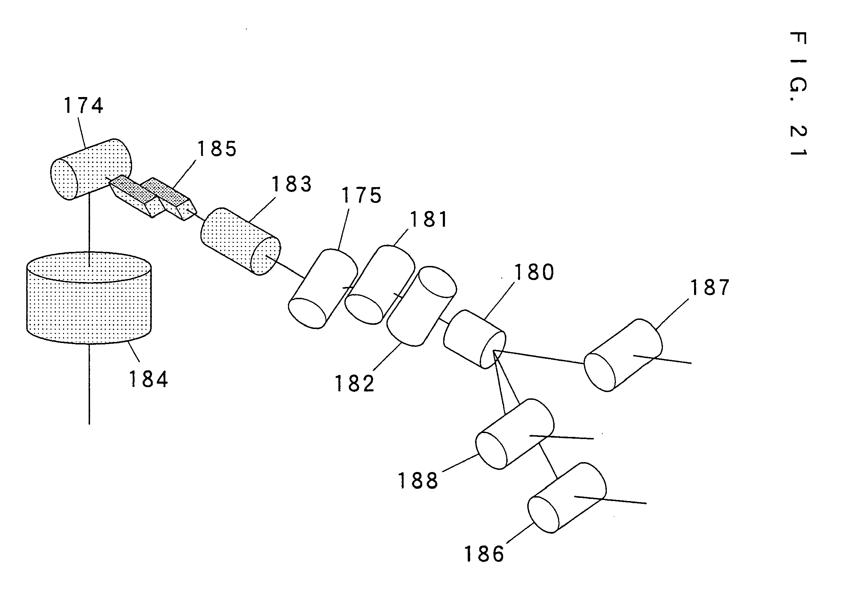

FIG. 21 is an exemplary view depicting the steering arms 142 and 162 of the left light-load working arms depicted in FIG 16 and FIG. 18.

In FIG. 21, a portion for detecting vertical rotation of the basal arm 174, a portion for detecting vertical rotation of the branch arm 175, a portion for detecting turn of the wrist portion 180, a portion for detecting X-axis rotation of the wrist portion 181, a portion for detecting Y-axis rotation of the wrist portion 182, basal arm turn instructing switch 183, basal arm.lateral rotation instructing switch 184, basal arm extension and contraction instructing switch 185, thumb open/close instructing switch 186, middle finger open/close instructing switch 187, and forefinger open/close instructing switch 188 are similar to those of FIG. 16 and FIG. 18.

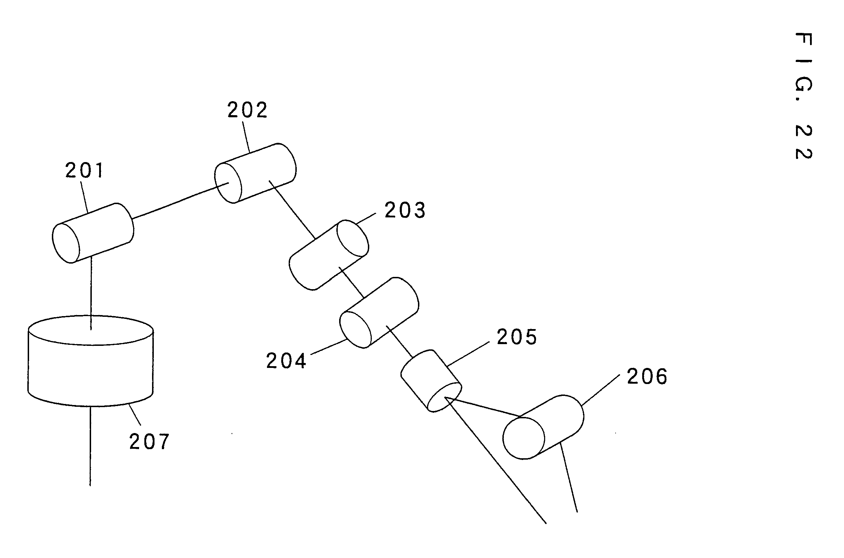

FIG. 22 is an exemplary view depicting the heavy-load working arm 120A of the robot apparatus 2.

In FIG. 22, reference numeral 201 denotes a basal arm vertical rotation portion, 202 denotes a branch arm vertical rotation portion, 203 denotes a wrist portion lateral rotation portion, 204 denotes a wrist portion vertical rotation portion, 205 denotes a wrist portion turning portion, and 206 denotes a hand opening and closing portion.

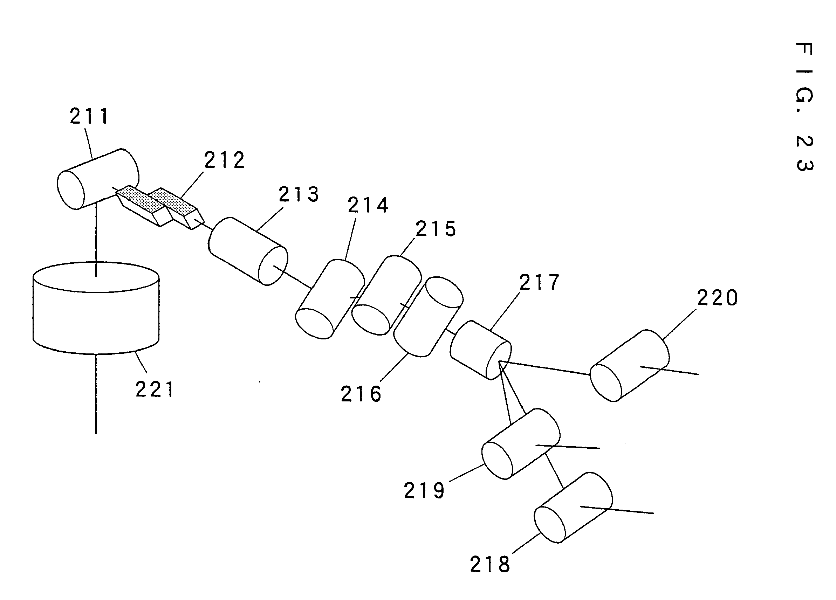

FIG. 23 is an exemplary view depicting the light-load working arm 120B of the robot apparatus 2.

In FIG. 23, reference numeral 211 denotes a basal arm vertical rotation portion, 212 denotes a basal arm extension and contraction portion, 213 denotes a basal arm turning portion, 214 denotes a branch arm vertical rotation portion, 215 denotes a wrist portion X-axis turning portion, 216 denotes a wrist portion Y-axis rotation portion, 217 denotes a wrist portion turningportion, 218 denotes a thumb opening and closingportion, 219 denotes a middle finger opening and closing portion, 220 denotes a forefinger opening and closing portion, and 221 denotes a basal arm lateral rotation portion.

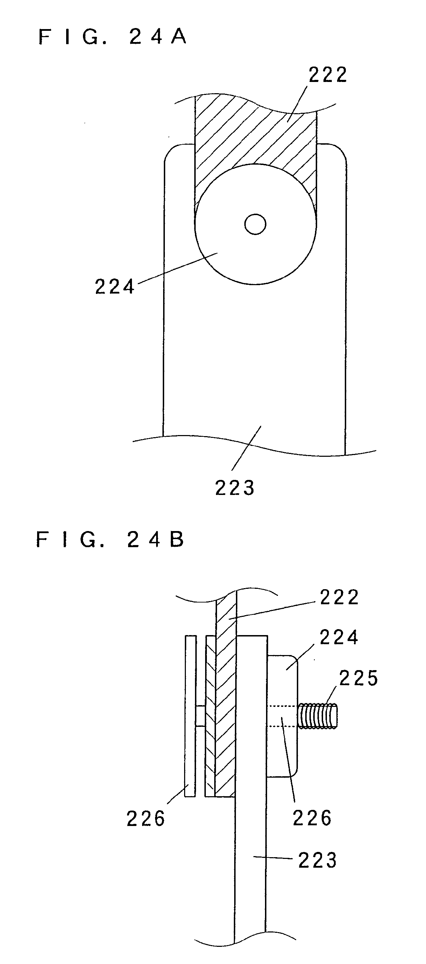

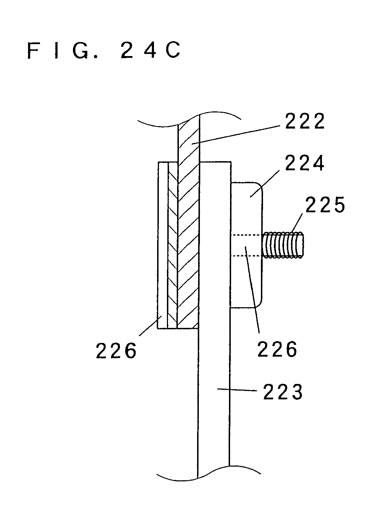

FIG. 24A, FIG. 24B, and FIG. 24C are explanatory views depicting a disk pad brake for fixing the positions of respective detection points of the heavy-load working arms 141 and 161 of FIG. 15 and FIG. 17 and the light-load working arms 142 and 162 of FIG. 16 and FIG. 18, wherein FIG. 24B depicts a state where the actuator is turned on, and FIG. 24C depicts a state where the actuator is turned off.

In FIG. 24, reference numerals 222 and 223 denote frames, 224 denotes an actuator, and 225 denotes a spring. A disk portion 226 laterally moves by the actuator 224 on the paper of FIG. 24.

As depicted in FIG. 24B, when the actuator 224 is turned on (magnetized), the disk portion 226 is separated from the frame 222, and the disk pad brake is turned off (that is, in a state where no braking is valid). As depicted in FIG. 24C, when the actuator 224 is turned off (demagnetized), the disk portion 226 is pressed to the frame 222, and the disk pad brake is turned on (that is, in a state where braking is valid). Thus, the disk pad brake is turned on and off by turning on or off the actuator 224, the positions of the respective detection portions are released or fixed. The actuator 224 is turned on and off by the fix/release instructing switches 198 and 199 of FIG. 19.

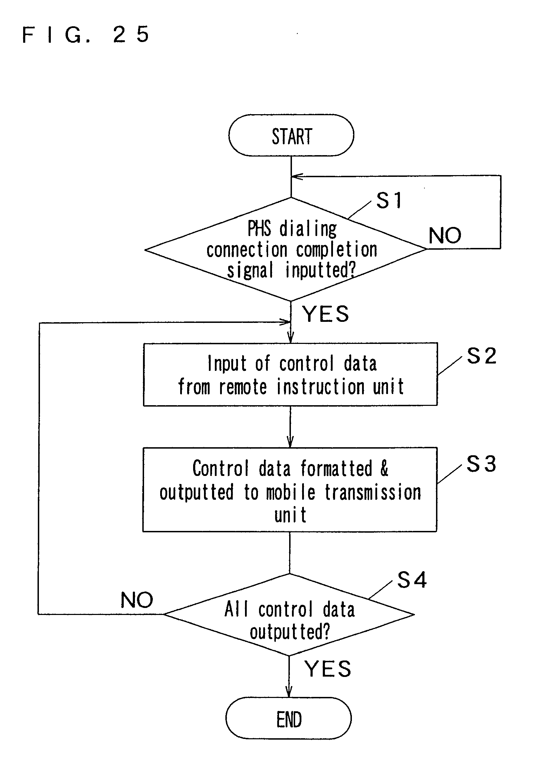

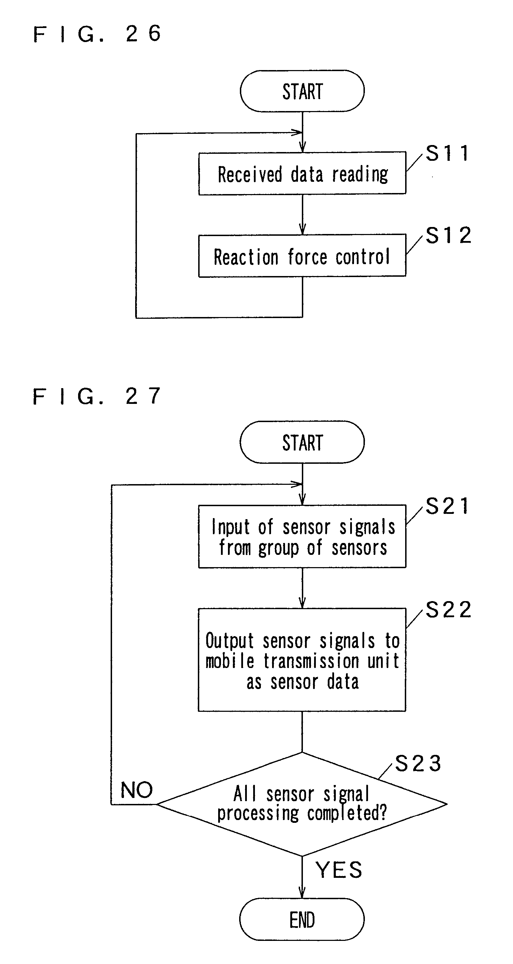

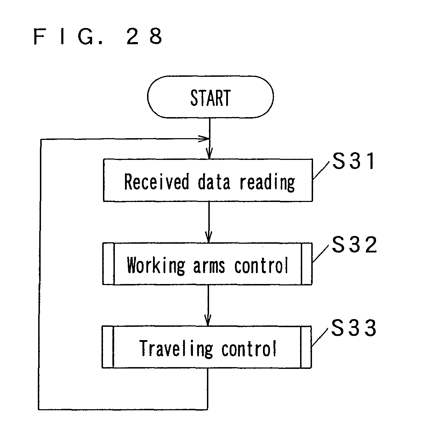

Next, a description is given of activities of the robot remote control apparatus 1 and the robot apparatus 2, which are thus composed, with reference to FIG. 25 through FIG. 29. FIG. 25 is a flowchart depicting a transmission behavior in the robot remote control apparatus 1, FIG. 26 is a flowchart depicting a receiving behavior (reaction control) in the robot remote control apparatus 1, FIG. 27 is a flowchart depicting a transmission behavior in the robot apparatus 2, and FIG. 28, FIG. 29 and FIG. 30 are flowcharts depicting receiving behaviors in the robot apparatus 2. Herein, FIG. 25 and FIG. 26 depict behaviors of the CPU 31, and FIG. 27 through FIG. 30 depict behaviors of the CPU 71.

In FIG. 25, first, a dialing connection is made from the mobile transmission unit 35 depicted in FIG. 2, and a completion signal of PHS dialing connection is transmitted to the CPU 31 via the mobile transmission card 36 and the interface portion 32a, wherein the CPU 31 determines that controlling is available, and notifies the display unit portion 5 of its availability (S1). Next, theCPU 31 receives input of control data (the control data including a turn angle, rotation angle, ON and OFF of instruction switches) from the remote instruction unit 4 (S2), formats the control data and outputs the same to the mobile transmission unit 35 (S3). Behaviors in Steps S2 and S3 are repeated until the output of all the control data is completed (S4).

Next, using FIG. 26, a description is given of a receiving behavior in the robot remote control apparatus 1.

In FIG. 26, the CPU 31 depicted in FIG. 2 reads received data from the mobile transmission unit 35 (S11), and carries out reaction control of the steering arms 141 and 142 of the remote instruction unit 4 on the basis of the received data (S12).

Next, using FIG. 27, a description is given of a transmission behavior in the robot apparatus 2.

In FIG. 27, the CPU 71 depicted in FIG. 3 receives input of sensor signals from the sensor group 109 (S21), formats the sensor signals to the sensor data and outputs the same to the mobile transmission unit 75 (S22) . Behaviors of Steps S21 and S22 are repeated until processing of all of the sensor signals is completed (S23).

Next, using FIG. 28 through FIG. 30, a description is given of a receiving behavior in the robot apparatus 2.

In FIG. 28, first, the CPU 71 depicted in FIG. 3 reads received data from the mobile transmission unit 75 as various types of control data (S31) and controls the working arms (S32) and travelling (S33).

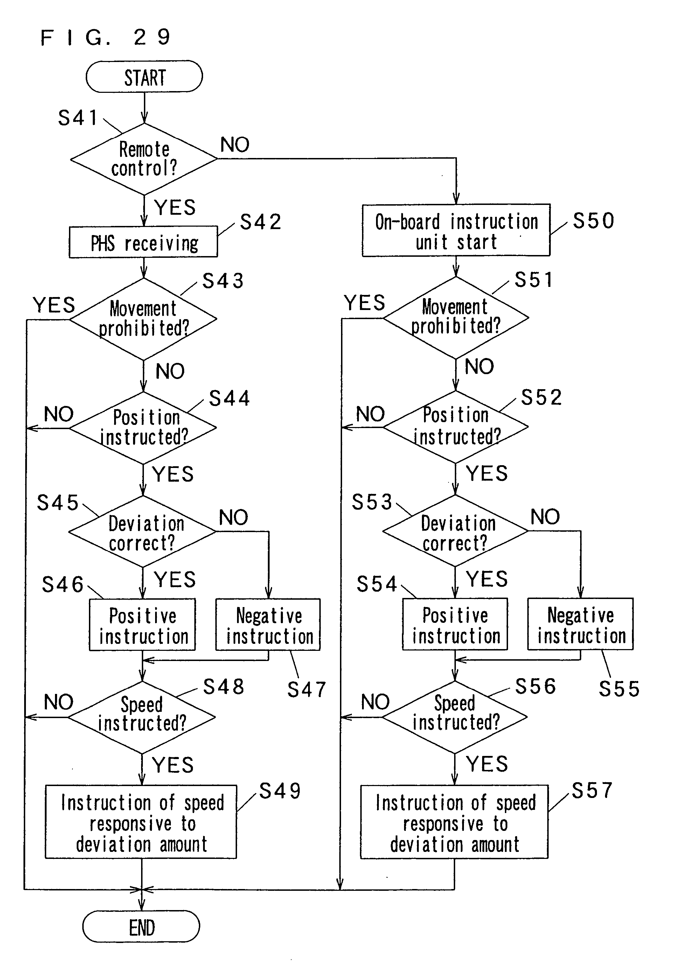

With reference to FIG. 29, a description is given of control of the working arms in Step S32.

In FIG. 29, first, the CPU 71 depicted in FIG. 3 determines whether the control is remote control (S41), and when remote control is determined, the CPU 71 receives control data from PHS (S42) . Next, the CPU 71 determines whether or not operation prohibition is valid (S43) and determines whether or not any position instruction is valid (S44). Where the operation prohibition is valid or where no position instruction is valid, the CPU 71 finishes processing. Where the operation is not prohibited and a position instruction is valid, the CPU 71 next determines whether the deviation is positive or negative (S45) . If the deviation is positive, the CPU 71 instructs POSITIVE (clockwise rotation of motor, and cylinder movement in the positive direction) to the driver unit for motors 93 and hydraulic servo valve unit 94 (S46), and if the deviation is negative, the CPU 71 instructs NEGATIVE (counterclockwise rotation of the motor, and cylinder movement in the negative direction) thereto (S47). Next, the CPU 71 determines whether a speed instruction is valid (S48), and if the speed instruction is valid, a speed responsive to the deviation is instructed (S49).

Where it is determined in Step S41 that no remote control is valid, the CPU 71 starts the on-board instruction unit 8 (S50), determines whether operation prohibition is valid (S51), and determines whether a position instruction is valid (S52) . Where the operation prohibition is valid or no position instruction is valid, the processing ends. Where the operation is not prohibited, and a position instruction is valid, the CPU 71 next determines whether the deviation is positive or negative (S53). If the deviation is positive, the CPU 71 instructs POSITIVE (clockwise rotation of motor, and cylinder movement in the positive direction) to the driver unit for motors 93 and hydraulic servo valve unit 94 (S54), and if the deviation is negative, the CPU 71 instructs NEGATIVE (counterclockwise rotation of the motor, and cylinder movement in the negative direction) (S55) thereto. Next, the CPU 71 determines whether a speed instruction is valid (S56), and if the speed instruction is valid, a speed responsive to the deviation is instructed (S57).

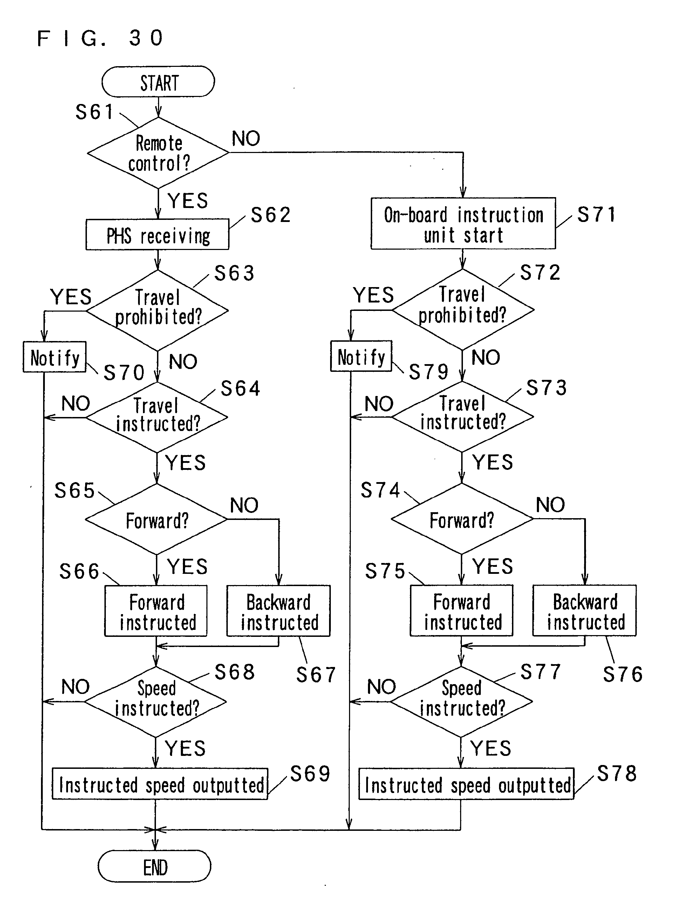

Using FIG. 30, a description is given of travelling control in Step S33, which is depicted in FIG. 28.

In FIG. 30, first, the CPU 71 depicted in FIG. 2 determines whether the remote control is valid (S61). Where the CPU 71 determines that the remote control is valid, it receives control data from a PHS (S62). Next, the CPU 71 determines whether travelling prohibition is valid (S63), and determines whether a travelling instruction is valid (S64). If the travelling prohibition is valid, the same is notified, and the processing ends (S70). If no travelling instruction is provided, the processing immediately ends. If the travelling prohibition is not valid, and a travelling instruction is provided, the CPU 71 next determines whether the travelling is forward (S65). In the case of forward travelling, the CPU 71 instructs FORWARD to the driver unit for motors 93 and hydraulic servo valve unit 94 (S66), and in the case of rearward, rearward travelling is instructed (S67) . Next, the CPU 71 determines whether a speed instruction is valid (S68) . If a speed instruction is provided, the CPU 71 outputs an instruction speed (S69).

Where the CPU 71 determines in Step S61 that no remote control is valid, the CPU 71 starts the on-board instruction unit 8 depicted in FIG. 1 and FIG. 3 (S71), and determines whether travelling prohibition is valid (S72) and whether a travelling instruction is provided (S73). If the travelling prohibition is valid, the same is notified, and the processing ends (S79). Where the travelling prohibition is not valid, the processing immediately ends. Where the travelling prohibition is not valid, and a travelling instruction is provided, next, the CPU 71 determines whether the travelling is forward (S74) . In the case of forward travelling, the CPU 71 instructs FORWARD to the driver unit for motors 93 and hydraulic servo valve unit 94 (S75), and in the case of rearward, rearward travelling is instructed (S76) . Next, the CPU 71 determines whether a speed instruction is valid (S77). If a speed instruction is provided, the CPU 71 outputs an instruction speed (S78).

As described above, according to the present embodiment, the robot remote control apparatus 1 includes a remote instruction unit 4 for generating control data for the robot apparatus 2, the first computer unit 30, into which the control data is inputted, for processing the same, and the first mobile transmission unit 35 for transmitting the control data to the base station 19 connected to the public transmission network 20. The robot apparatus 2 includes the secondmobile transmission unit 75 for receiving control data transmitted from the base station 21 connected to the public transmission network 20 and the second computer unit 70 for processing the control data and controlling the mechanism portion 10. The mechanism portion 10 includes one or two heavy-load working arms 120A, one or two light-load working arms 120B and travelling system, which are controlled by the second computer unit 70. By the second computer unit 70 controlling one or two heavy-load working arms 120A, one or two light-load working arms 120B and travelling system on the basis of the control data for the robot apparatus 2, the control data from the robot remote control apparatus 1 are transmitted via the first mobile transmission unit 35, the robot apparatus 2 can be controlled even if the robot apparatus 2 being an object to be controlled is located at least anywhere in Japan, and since the robot apparatus 2 includes one or two heavy-load working arms 120A and one or two light-load working arms 120B, one or two heavy-load working arms 120A are caused to carry out a removal activity of a heavy load, and one or two light-load working arms 120B are caused to carry out skillful activities, wherein such an advantageous effect is brought about, by which a quick rescue activity can be carried out.

In addition, since the robot apparatus 2 is provided with one or two heavy-load working arms 120A and one or two light-load working arms 120B disposed inside one or two heavy-load working arms 120A, which are provided with the basal arms 121 and 125, branch arms 122 and 128, wrist portion (wrist portion) 123 and 129 and finger portions 124 and 130, respectively, the heavy-load working arms 120A disposed outside are caused to carry out powerful activities such as removal of heavy loads, and one or two light-load working arms 120B disposed inside are caused to carry out skillful activities not requiring any great power. Therefore, quick rescue activities can be securely carried out.

Further, one or two heavy-load working arms 120A and the travelling system are driven by hydraulic power, and one or two light-load working arms 120B are driven by electric power, wherein the heavy-loadworking arms 120Awhich are hydraulically driven are caused to securely carry out powerful activities such as removal of heavy loads, and one or two light-load working arms 120B which are electrically driven are caused to carry out skillful activities at high accuracy. Therefore, quick rescue activities can be securely carried out at high accuracy.

Further, since the travelling system is composed of crawlers 2b, which are hydraulically driven, the robot apparatus 2 is capable of easily travelling at a high speed even if the site is an uneven road or steeply inclined, or its topographic features are hard to travel.

Still further, the robot apparatus 2 includes a carriage base driven by the travelling system and a cabin on the carriage base, and the cabin is provided with an on-board instruction unit 8 for controlling one or two heavy-load working arms 120A, one or two light-load working arms 120B and travelling system. Therefore, it is possible to easily control the robot apparatus not only at a remote place but also at the vicinity of the site, which is on board the robot apparatus.

In addition, the mechanism portion 10 is provided with a plurality of cameras 131 through 138 for picking up an object and converting the same into image signals, and a plurality of microphones for converting the surrounding sound and noise into sound signals. The second computer unit 70 transmits the image signals and sound signals via the second mobile transmission unit 75, and the robot remote control apparatus 1 receives signals transmitted from the second mobile transmission unit 75, displays the image signals on the monitor display 12, and sends the sound signals via the speaker 14 as sound. Accordingly, even at a place remote from the site, it is possible to know the status of the robot apparatus 2 by means of images and sound, wherein the robot apparatus 2 can be accurately and quickly controlled.

Also, the remote instruction unit 4 is provided with rotatable and movable steering arms 141 and 142, a plurality of sensors disposed in the steering arms, and a plurality of instruction switches for generating ON/OFF instructions, wherein, by generating control data for the robot apparatus 2 on the basis of values of rotation and movement detected by a plurality of sensors and ON/OFF statuses of a plurality of instruction switches, the control data for the robot apparatus can be generated by a plurality of sensors and a plurality of instruction switches when operating the steering arms 141 and 142 and turning on and off the instruction switches. Accordingly, the robot apparatus 2 can be easily controlled.

Further, the on-board instruction unit 8 is provided with rotatable and movable steering arms 161 and 162, a plurality of sensors disposed in the steering arms, and a plurality of instruction switches for generating ON/OFF instructions, wherein, by generating control data for the robot apparatus 2 on the basis of values of rotation and movement detected by a plurality of sensors and ON/OFF statuses of a plurality of instruction switches, the control data for the robot apparatus 2 can be generated by a plurality of sensors and a plurality of instruction switches when operating the steering arms 161 and 162 and turning on and off the instruction switches. Accordingly, the robot apparatus 2 can be easily controlled.

In addition, the rotatable and movable steering arms 141 and 142 and 161 and 162 are turned into fixed state or released state by a fixing mechanism such as disk pad brake having a disk portion 226 driven by the actuator 224, wherein, since the steering arms 141 and 142 and 161 and 162 of the heavy-load working arms and the light-load working arms can be easily set to a fixed state or released state, operation for controlling the robot apparatus can be facilitated.

### INDUSTRIAL APPLICABILITY

As described above, according to the remote control system for robot as set forth in the first aspect of the invention, the remote control system for robot includes a robot remote control apparatus for remotely controlling a robot and a robot apparatus controlled based on data from the remote control apparatus; wherein the robot remote control apparatus includes a remote instruction unit for generating control data for the robot apparatus, a first computer unit for inputting and processing the control data, and a first mobile transmission unit for transmitting the control data to a base station connected to a public transmission network; the robot apparatus includes a second mobile transmission unit for receiving the control data transmitted from the base station connected to the public transmission network, and a second computer unit for processing the control data and controlling a mechanism portion; the mechanism portion includes one or two heavy-load working arms, one or two light-load working arms, and a travelling system, all of which are controlled by the second computer unit; and the second computer unit controls one or two heavy-load working arms, one or two light-load working arms, and the travelling system on the basis of the control data for the robot apparatus. Therefore, since control data from the robot remote control apparatus is transmitted via the first mobile transmission unit, it is possible to control a robot apparatus even if the robot apparatus operating as an object to be controlled is installed at least anywhere in Japan, and at the same time, since the robot apparatus includes one or two heavy-load working arms and one or two light-load working arms, the heavy-load working arms are caused to carry out activities for removing a heavy load, and the light-load working arms are caused to carry out skillful activities. Accordingly, such an advantageous effect is brought about, by which the remote control system for robot can carry out quick rescue activities.

According to a remote control system for robot as set forth in the second aspect of the invention, in the remote control system for robot according to the first aspect, one or two heavy-load working arms and one or two light-load working arms, respectively, include a basal arm, a branch arm, a wrist portion and a finger portion. Since the robot apparatus is provided with one or two heavy-load working arms and one or two light-load working arms disposed inside one or two heavy-load working arms, the heavy-load working arms disposed outside are caused to carry out powerful activities such as removal of a heavy load, and the light-load working arms disposed inwardly are caused to carry out skillful activities not requiring great power. Therefore, such an advantageous effect is brought about, by which quick rescue activities can be securely carried out.

According to a remote control system for robot as set forth in the third aspect of the invention, in the remote control system for robot according to the first aspect or the second aspect, one or two heavy-load working arms and the travelling system are driven by hydraulic power, and one or two light-load working arms are driven by electric power. Since the heavy-load working arms are caused to carry out powerful activities such as removal of a heavy load, and the light-load working arms driven by electric power are caused to carry out highly precise and skillful activities, such an advantageous effect is brought about, by which it becomes possible to quickly and securely carry out a rescue activity at high accuracy.

According to a remote control system for robot as set forth in the fourth aspect of the invention, in the remote control system for robot according to any one of the first aspect through the third aspect, the travelling system is composed of crawlers driven by hydraulic power. Such an advantageous effect is brought about, by which the robot apparatus can easily move at a high speed even if the site is a hard-to-travel place such as an uneven road and steeply inclined topographic features.

According to a remote control system for robot as set forth in the fifth aspect, in the remote control system for robot according to anyone of the first aspect through the fourth aspect, the robot apparatus includes a carriage base driven by the travelling system, a cabin on the carriage base, and further includes an on-board instruction unit for controlling one or two heavy-loadworking arms, one or two light-load working arms and the travelling system in the cabin. Therefore, such an advantageous effect is brought about, by which the robot apparatus can be easily controlled not only at a place remote from the site but also at the vicinity of the site, which is on board the cabin.

According to a remote control system for robot as set forth in the sixth aspect, in the remote control system for robot according to any one of the first aspect through the fifth aspect, the mechanism portion includes a plurality of cameras for picking up an object and converting the same into image signals, and a plurality of microphones for converting sound and noise generated in the surroundings into sound signals, the second computer unit transmits the image signals and sound signals via the second mobile transmission unit, and the robot remote control apparatus receives signals transmitted from the second mobile transmission unit, displays the image signal on a monitor display and sends out the sound signals through a speaker as sound. Therefore, such an advantageous effect is brought about, by which, since it is possible to know the status of the robot apparatus through images and sound even if it is installed at a remote place, the robot apparatus can be quickly controlled at high accuracy.

According to a remote control system for robot as set forth in the seventh aspect, in the remote control system for robot according to any one of the first aspect through the sixth aspect, a remote instruction unit includes rotatable and movable working arms, a plurality of sensors disposed in the working arms, and a plurality of instruction switches for carrying out ON/OFF instructions, wherein control data for the robot apparatus is generated on the basis of values of rotation and movement detected by a plurality of sensors and ON/OFF of a plurality of instruction switches. Therefore, since control data for the robot apparatus can be generated by means of a plurality of sensors and a plurality of instruction switches by operating the steering arms and turning on and off the instruction switches, such an advantageous effect is brought about, by which the robot apparatus can be easily controlled.

According to a remote control system for robot as set forth in the eighth aspect of the invention, in the remote control system for robot according to any one of the fifth aspect through the seventh aspect, the on-board instruction unit includes rotatable and movable working arms, a plurality of sensors disposed in the working arms, and a plurality of instruction switches for carrying out ON/OFF instructions, wherein control data for the robot apparatus is generated on the basis of values of rotation and movement detected by a plurality of sensors and ON/OFF of a plurality of instruction switches. Therefore, since control data for the robot apparatus can be generated by means of a plurality of sensors and a plurality of instruction switches by operating the steering arms and turning on and off the instruction switches, such an advantageous effect is brought about, by which the robot apparatus can be easily controlled.

According to a remote control system for robot as set forth in the ninth aspect, in the remote control system for robot according to the seventh aspect or the eighth aspect, the rotatable and movable steering arms are turned into a fixed state or a released state by a fixing mechanism such as a disk padbrake having a disk portion driven by an actuator. Therefore, since the steering arms of the heavy-load working arms and the light-load working arms can be easily set to a fixed state or a released state, such an advantageous effect is brought about, by which operation for controlling the robot apparatus can be facilitated.

**Table 1**

| | | | |
|---|---|---|---|
| Right light-load working arm | Basal arm | Lateral rotation | Displacement detecting sensor |
| Left light-load working arm | Basal arm | Lateral rotation | Displacement detecting sensor |
| Right light-load working arm | Basal arm | Vertical rotation | Displacement detecting sensor |
| Left light-load working arm | Basal arm | Vertical rotation | Displacement detecting sensor |
| Right light-load working arm | Basal arm | Extension and contraction | Displacement detecting sensor |
| Left light-load working arm | Basal arm | Extension and contraction | Displacement detecting sensor |
| Right light-load working arm | Basal arm | Rotation | Displacement detecting sensor |
| Left light-load working arm | Basal arm | Rotation | Displacement detecting sensor |
| Right light-load working arm | Branch arm | Rotation | Displacement detecting sensor |
| Left light-load working arm | Branch arm | Rotation | Displacement detecting sensor |
| Right light-load working arm | Hand base | X-axis rotation | Displacement detecting sensor |
| Left light-load working arm | Hand base | X-axis rotation | Displacement detecting sensor |
| Right light-load working arm | Hand base | Y-axis rotation | Displacement detecting sensor |
| Left light-load working arm | Hand base | Y-axis rotation | Displacement detecting sensor |
| Right light-load working arm | Hand base | Rotation | Displacement detecting sensor |
| Left light-load working arm | Hand base | Rotation | Displacement detecting sensor |
| Right light-load working arm | Thumb | Open and close | Displacement detecting sensor |
| Left light-load working arm | Thumb | Open and close | Displacement detecting sensor |
| Right light-load working arm | Fore-finger | Open and close | Displacement detecting sensor |
| Left light-load working arm | Fore-finger | Open and close | Displacement detecting sensor |

**Table 2**

| | | | |
|---|---|---|---|
| Right light-load working arm | Middle-finger | Open and close | Displacement detecting sensor |
| Left light-load working arm | Middle-finger | Open and close | Displacement detecting sensor |
| Right light-load working arm | Camera mount | X-axis movement | Displacement detecting sensor |
| Left light-load working arm | Camera mount | X-axis movement | Displacement detecting sensor |
| Right light-load working arm | Camera mount | Y-axis movement | Displacement detecting sensor |
| Left light-load working arm | Camera mount | Y-axis movement | Displacement detecting sensor |
| Right heavy-load working arm | Camera mount | X-axis movement | Displacement detecting sensor |
| Left heavy-load working arm | Camera mount | X-axis movement | Displacement detecting sensor |
| Right heavy-load working arm | Camera mount | Y-axis movement | Displacement detecting sensor |
| Left heavy-load working arm | Camera mount | Y-axis movement | Displacement detecting sensor |
| Right heavy-load working arm | Basal arm | Lateral rotation | Displacement detecting sensor |
| Left heavy-load working arm | Basal arm | Lateral rotation | Displacement detecting sensor |
| Right heavy-load working arm | Basal arm | Vertical rotation | Displacement detecting sensor |
| Left heavy-load working arm | Basal arm | Vertical rotation | Displacement detecting sensor |
| Right heavy-load working arm | Branch arm | Vertical rotation | Displacement detecting sensor |
| Left heavy-load working arm | Branch arm | Vertical rotation | Displacement detecting sensor |
| Right heavy-load working arm | Hand base | Lateral rotation | Displacement detecting sensor |
| Left heavy-load working arm | Hand base | Lateral rotation | Displacement detecting sensor |
| Right heavy-load working arm | Hand base | Vertical rotation | Displacement detecting sensor |
| Left heavy-load working arm | Hand base | Vertical rotation | Displacement detecting sensor |

**Table 3**

| | | | |
|---|---|---|---|
| Right heavy-load working arm | Hand base | Rotation | Displacement detecting sensor |
| Left heavy-load working arm | Hand base | Rotation | Displacement detecting sensor |
| Right heavy-load working arm | Hand | Open and close | Displacement detecting sensor |
| Left heavy-load working arm | Hand | Open and close | Displacement detecting sensor |
| Right crawler | | Drive | Displacement detecting sensor |
| Left crawler | | Drive | Displacement detecting sensor |
| Upper equipment base | | Lateral rotation | Displacement detecting sensor |
| Excavation blade | | Vertical rotation | Displacement detecting sensor |

## Claims

1. A remote control system for robot comprising: a robot remote control apparatus for remotely controlling a robot and a robot apparatus controlledbased on data from said robot remote control apparatus;
wherein said robot remote control apparatus includes a remote instruction unit for generating control data for said robot apparatus, a first computer unit for inputting and processing said control data, and a first mobile transmission unit for transmitting said control data to a base station connected to a public transmission network; said robot apparatus includes a second mobile transmission unit for receiving said control data transmitted from the base station connected to the public transmission network, and a second computer unit for processing said control data and controlling a mechanism portion; said mechanism portion includes one or two heavy-load working arms, one or two light-load working arms, and a traveling system, all of which are controlled by said second computer unit; and said second computer unit controls said one or two heavy-load working arms, said one or two light-load working arms, and said traveling system on the basis of the control data for said robot apparatus.

2. The remote control system for robot as set forth in Claim 1, wherein said one or two heavy-load working arms and said one or two light-load working arms, respectively, include a basal arm, a branch arm, a wrist portion and a finger portion.

3. The remote control system for robot as set forth in Claim 1 or 2, wherein said one or two heavy-load working arms and said traveling system are driven by hydraulic power, and said one or two light-load working arms are driven by electric power.

4. The remote control system for robot as set forth in any one of Claims 1 through 3, wherein said traveling system is composed of crawlers driven by hydraulic power.

5. The remote control system for robot as set forth in any one of Claims 1 through 4, wherein said robot apparatus includes a carriage base driven by said traveling system, a cabin on said carriage base, and further includes an on-board instruction unit for controlling said one or two heavy-load working arms, said one or two light-load working arms and said traveling system in said cabin.

6. The remote control system for robot as set forth in any one of Claims 1 through 5, wherein said mechanism portion includes a plurality of cameras for picking up an object and converting the same into image signals, and a plurality of microphones for converting sound and noise generated in the surroundings into sound signals, said second computer unit transmits said image signals and said sound signals via said second mobile transmission unit, and said robot remote control apparatus receives signals transmitted from said second mobile transmission unit, displays said image signals on a monitor display and sends out said sound signals through a speaker as sound.

7. The remote control system for robot as set forth in any one of Claims 1 through 6, wherein said remote instruction unit includes rotatable and movable steering arms, a plurality of sensors disposed in said steering arms, and a plurality of instruction switches for carrying out ON/OFF instructions, and wherein control data for said robot apparatus is generated on the basis of values of said rotation and movement detected by said plurality of sensors and ON/OFF of said plurality of instruction switches.

8. The remote control system for robot as set forth in any one of Claims 5 through 7, wherein said on-board instruction unit includes rotatable and movable steering arms, a plurality of sensors disposed in said steering arms, and a plurality of instruction switches for carrying out ON/OFF instructions, and wherein control data for said robot apparatus is generated on the basis of values of said rotation and movement detected by said plurality of sensors and ON/OFF of said plurality of instruction switches.

9. The remote control system for robot as set forth in Claim 7 or 8, wherein said rotatable and movable steering arms are turned into a fixed state or a released state by a fixing mechanism such as a disk pad brake having a disk portion driven by a actuator.
